# EUROPEAN PATENT SPECIFICATION

(11) **EP 1 780 567 B1**
(45) Date of publication and mention of the grant of the patent: **14.09.2011**
(21) Application number: 04770814.4
(22) Date of filing: 20.07.2004
(51) Int. Cl.: G02B 7/10, G02B 13/00

(54) **ELECTRONIC IMAGING DEVICE**
ELEKTRONISCHE BILDGEBUNGSEINRICHTUNG
DISPOSITIF ÉLECTRONIQUE D'IMAGERIE

(43) Date of publication of application: 02.05.2007
(73) Proprietor: Five Dimension Co., Ltd., Takatsu-ku, Kawasaki-shi Kanagawa 2130002 (JP)
(72) Inventor: Nakamura, Hiroaki, c/o five Dimension Co., Ltd, Kanagawa 2130002 (JP)
(74) Representative: Stenborg, Anders Vilhelm
(86) International application number: PCT/JP2004/010303
(87) International publication number: WO 2006/008805

(56) References cited:
- JP-A- 11 174 311
- JP-A- 11 174 311
- JP-A- 2003 043 354
- US-A- 4 881 799
- US-A- 5 687 029

## Description

### [Field of the Invention]

The present invention relates generally to electronic imaging devices, and more particularly, to an electronic imaging device having a zoom function and capable of being reduced in depth.

### [Background Art]

Products with a built-in electronic imaging device, such as digital cameras, PDAs (Personal Digital Assistants), and cellular phones, have been proliferating in recent years. For these products, electronic imaging devices for acquiring images are being requested to be smaller in depth and higher in image quality and in zoom ratio.

In order to meet these requests, various electronic imaging devices are being proposed. Patent Document 1 describes a magnification selector including: a first lens unit 1; a second lens unit; first guidance means for selecting a magnification by guiding the second lens unit so that the lens unit forms a required optical path with respect to the first lens unit; and a plurality of second guidance means each for controlling a focal point by guiding the second lens unit so that this lens unit forms a required optical path different from that based on the first guidance means, with respect to the first lens unit; wherein each second guidance means is provided at alternate positions with respect to the first guidance means, on an extension of the first guidance means.

Also, Patent Document 2 describes a zoom camera having two or more lens groups. This zoom camera includes: a zooming drive annulus for driving a specific lens group; a focusing/zooming drive annulus for driving another specific lens group, disposed adjacently to the zooming drive annulus; a driving source for rotationally moving the focusing/zooming drive annulus in a reverse direction; and clutch means formed at a section opposed to the zooming drive annulus and to the focusing/zooming drive annulus, the clutch means including an engaging section that pressingly rotates the zooming drive annulus in response to the rotational movement of the focusing/zooming drive annulus, and an air transport section that does not pressingly rotates the zooming drive annulus; wherein focusing is accomplished by the rotational movement of the focusing/zooming drive annulus in the air transport section, and zooming is accomplished by the synchronous rotations of the focusing/zooming drive annulus and the zooming drive annulus by the engaging section.

In addition, Patent Document 3 describes a thin optical system mountable in a compact digital still camera or the like. This optical system as a reflective imaging optical system reflecting a beam of light along an optical axis thereof for reduced thickness of the system and having power assigned to a reflective prism, includes: first group GF having negative power; an aperture stop S; and second group GR having positive power; wherein the first group GF includes a beam-reflecting member having power assigned thereto, and the beam-reflecting member consists of a prism P which has a planar reflection surface and uses a surface constructed by a curved surface rotationally symmetric to an optical axis, as at least either one of two surfaces serving as an entrance surface and an exit surface.

In addition, Patent Document 4 describes an electronic imaging device extremely small in depth and employing an optical system of the type which, while maintaining excellent specifications and high performance, does not have restrictions on movements of a moving group during a magnification change. This electronic imaging device has, from the object side in order: a beam-reflecting zoom optical system that includes first group G-1 formed up of a negative lens group and an reflective optical element P for reflecting a beam of light along an optical path, first second group G1-2 inclusive of one positive lens, and second group G2 with positive refracting power, and moves the second group G2 only to the object side when a magnification change from a wide-angle end to a telescopic end is conducted; and an electronic imaging element I disposed at the associated image side.
In addition, Patent Document 5 describes a varifocal lens device. Compensation of a deviation produced in the image forming position of a varifocal lens in consequence of magnification is attained by transforming a compensation amount into a relative amount of movement through arithmetic operation and driving the focusing lens group of the varifocal lens until the actual amount of movement conforms to the value obtained by the transformation.
Finally, Patent Document 6 describes an optical system driving device for driving a cam means to make photographic optical systems of two lenses to move in the optical axis direction. A cam area for normal variable power photographing and a cam area for macro photographing are continuously formed on the cam means. The cam is driven by a step motor.
A similar disclosure is provided by US Patent No. 4, 881, 799 used for the two part delimitation of appended claim 1.

Patent Document 1: Japanese Patent Publication No. 2140208
Patent Document 2: Japanese Patent Publication No. 2929480
Patent Document 3: Japanese Laid-Open Patent Application Publication No. 2003-98430
Patent Document 4: Japanese Laid-Open Patent Application Publication No. 2003-43354
Patent Document 5: US Patent No. 5,687,029
Patent Document 6: Japanese Laid-Open Patent Application Publication No. 11 174311

### Summary of the Invention

### [Problems to be Solved by the Invention]

The device described in Patent Document 1 has the problem that image blurring or focusing is repeated since zooming causes the focus to be shifted from an infinite region, a close-up region, or a macro region, which are focus regions.

Also, the device described in Patent Document 2 has the problem that the image formed will blur when a zooming magnification change from the telescopic end to the wide-angle end is conducted. This is also true for the device described in document 5 and for the device described in document 6.

In addition, the device described in Patent Document 3 has the problem that since a fixed lens is disposed at both front and rear sections of the prism, the optical axis of the prism and those of the front and rear fixed lenses require precise alignment and this makes the assembly time-consuming. There is also the problem that if a sensor package is too large, the presence of this package will increase the device in thickness.
The device described in Patent Document 4 has the problem that since the reflective optical element is constructed on a curved surface to assign optical power to the entrance/exit surface of the reflective optical element, this optical element becomes expensive and optical axis alignment with other optical elements becomes a time-consuming task.

The present invention has been made in consideration of these current situations in conventional techniques, and an object of the invention is to provide an electronic imaging device low in price, high in image quality and in zoom ratio, and small in depth.

### [Means for Solving the Problems]

In one aspect of the present invention, an electronic imaging device includes: a first lens group positioned in the closest proximity to an object to be imaged, among all major optical elements of the imaging device; a second lens group that moves to change a magnification of an image to be acquired; a third lens group whose movement for another magnification change of the image to be acquired differs from the movement of the second lens group; and lens group moving means equipped with driving means and with cam grooves for moving the second lens group and the third lens group through respective predefined distances along an optical axis according to the particular amount of driving by the driving means, and adapted to change a total variable magnification of the second lens group and the third lens group. The cam grooves in the above lens group moving means are formed to include, in a zoom region from a wide-angle end to a telescopic end, a focusing region in which a focal point can be moved by controlling a total movement of both the second and third lens groups with at least either the second or third lens group fixed in a direction of the optical axis in the region where the second lens group and the third lens group enter a pan-focus state.

The electronic imaging device includes a second lens group adapted to reciprocate along an optical axis in the zoom region, and the focusing region in the zoom region is set so as not to include a section neighboring a moving-direction change point of the second lens group.

In another aspect of the present invention, in the electronic imaging device, the first lens group includes reflective optical means adapted to reflect a beam of light along an optical path from the target object.

In another aspect of the present invention, the electronic imaging device includes an electronic imaging element.

In another aspect of the present invention, the electronic imaging device includes focusing control means adapted to receive a signal from the imaging element and perform focusing control of the driving means.

In another aspect of the present invention, the electronic imaging device includes mode selection means adapted to make a pan-focus mode or an auto-focus mode selectable, and is constructed so that when the pan-focus mode is selected using the mode selection means, the focusing control means controls the driving of the lens group moving means and causes the lens groups in the wide-angle end state and in the telescopic end state to be arranged at the pan-focus position in the extended cam region.

In another aspect of the present invention, in the electronic imaging device, the lens group moving means includes a wide-angle macro region focus controller in the extended cam region formed at a position anterior to the wide-angle end, and/or a telescopic macro focus controller in the extended cam region formed at a position anterior to the telescopic end.

In another aspect of the present invention, in the electronic imaging device, when viewed from the wide-angle end or the telescopic end, the extended cam region of the lens group moving means is formed at an infinite position, a normal imaging close-up position, and a macro region position, in that order.

In another aspect of the present invention, in the electronic imaging device, the cam grooves in the lens group moving means include a first cam groove that determines a moving distance of the second lens group, and a second cam groove that determines a moving distance of the third lens group. The first cam groove is formed with a wide-angle end extended cam region in which a wide-angle end macro region, a wide-angle end normal close-up region, and a wide-angle end infinite region are arranged in that order towards a cam region. The first cam groove is also formed with a variable-magnification region and a telescopic end extended cam region in which a telescopic end infinite region, a telescopic end normal imaging close-up region, and a telescopic end macro region are arranged in that order from the cam region. The second cam groove is constructed to have a wide-angle extended cam region including a region in which the third lens group does not move in a direction of an optical axis at a wide-angle end, a variable-magnification region, and an extended cam region including a region in which the third lens group does not move in the direction of the optical axis at a telescopic end.

### [Effects of the Invention]

According to the present invention, since the zoom lens mechanism of the electronic imaging device is of simple focusing construction, it is possible to obtain an electronic imaging device that is compact and high in zoom ratio and in image quality.

According to the present invention, since the optical system is constructed so as to ensure pan focus during zooming, the image to be acquired is free from blurring, even during zooming toward the telescopic side and the wide-angle side. In addition, since the optical system is constructed so that infinite, close-up, and macro focusing operations can be performed at the telescopic end and the wide-angle end, it is possible to obtain an in-focus sharp image at both the telescopic end and the wide-angle end.

According to embodiments of the present invention, since the optical system includes reflective optical means, the optical system can be reduced in depth and when the electronic imaging device according to the present invention is mounted in an electronic appliance such as a cellular phone, the electric appliance can be minimized in thickness. In addition, since the reflective optical means closest to the target object does not have any related lenses, it is possible to easily conduct optical axis alignment and to reduce the electronic imaging device in thickness. Furthermore, when the electronic imaging device has reflective optical means at the imaging element side, an increase in the thickness of the electronic imaging device due to package thickness of the imaging means can be prevented, which makes the electronic imaging device constructible as an even thinner one.

According to embodiments of the present invention, the electronic imaging device can be dimensionally reduced since the refractive optical system is dimensionally limited to the minimum required for imaging.

According to embodiments of the present invention, when the electronic imaging device is of the construction intended for an electronic appliance in which the imaging device is to be used in a vertically long position, the electronic imaging device can be disposed in a transverse direction and is particularly suitable for use in a cellular phone when images are acquired with the cellular phone held in a vertically long position.

According to embodiments of the present invention, since the electronic imaging device includes electric power control means, it is possible to minimize the power consumed in the electronic imaging device, and thus to minimize the secondary-cell energy consumed in an electronic appliance in which the electronic imaging device is mounted.

### Brief Description of the Drawings

Fig. 1 shows a cellular phone to which an embodiment of an electronic imaging device according to the present invention is applied, wherein (a) is a front external view showing the cellular phone, and (b) is a front view showing the cellular phone in which the electronic imaging device is mounted;
Fig. 2 is a front view showing a usage state of the cellular phone shown in Fig. 1;
Fig. 3 shows an electronic imaging device, (a) is a longitudinal sectional view of an embodiment of an electronic imaging device according to the present invention, and (b) is a diagram showing a cam profile in an example of a Z-cam of an electronic imaging device;
Fig. 4 is a development diagram showing a detailed cam profile in a Z-cam of an embodiment of the electronic imaging device according to the invention;
Fig. 5 is a cross-sectional view of the electronic imaging device according to the embodiment;
Fig. 6 is a block diagram showing a control circuit of the electronic imaging device according to the embodiment;
Fig. 7 is a cross-sectional view of an electronic imaging device according to another embodiment;
Fig. 8 shows another electronic imaging device, (a) is a longitudinal sectional view of an embodiment of an electronic imaging device according to the present invention, and (b) is a diagram showing a cam profile of a Z-cam in an example of an electronic imaging device;
Fig. 9 is a diagram showing a cam profile of a Z-cam in another example of an electronic imaging device;
Fig. 10 is a diagram showing a cam profile of a Z-cam in yet another example of an electronic imaging device;
Fig. 11 is a diagram showing a cam profile of a Z-cam in a further electronic imaging device ;
Fig. 12 is a diagram showing schematically an electronic imaging device ;
Fig. 13 is a diagram showing an installation state of a Z-cam of the electronic imaging device shown in Fig. 12; and
Fig. 14 is a diagram showing a cam profile of the Z-cam in the electronic imaging device of Fig. 12.

### Legend

- 10: Cellular phone
- 11: Imaging window
- 12: Stroboscope light-emitting window
- 13: Cellular phone body
- 14: Antenna
- 20, 30: Enclosures
- 20: First enclosure
- 21: Liquid-crystal display screen
- 22: Speaker
- 30: Second enclosure
- 31: Input button section
- 32: Operating button section
- 33: Shutter button
- 34: Microphone
- 40: Hinge section
- 100: Electronic imaging device
- 110: First group
- 111: Prism
- 112: Prism frame
- 120: Second group
- 121,: 122 Negative lenses
- 123: Frame structure
- 124,: 135 Pins
- 130: Third group
- 131,: 132 Positive lenses
- 133: Negative lens
- 134: Frame structure
- 135: Pin
- 140: Fourth group
- 141: Positive lens
- 142: Fixed frame
- 150: Electronic imaging section
- 151: Imaging element
- 152: Package
- 153: Hold frame
- 154: IR cutoff filter
- 160: Z-cam
- 161: Cam groove for second group
- 161a: Zoom region
- 161b: Extended region at wide-angle side
- 161c: Extended region at telescopic side
- 162: Cam groove for third group
- 162a: Zoom region
- 162b: Extended region at wide-angle side
- 162c: Extended region at telescopic side
- 163: Gear
- 171: Suspension shaft
- 172: Anti-rotation member
- 173: Inter-group spring
- 180: Driving source
- 181: Stepping motor
- 182: Reduction gear train
- 190: Reflective optical system
- 191: Rectangular prism
- 192: Prism frame
- 195: Imaging system
- 196: Imaging element
- 197: Package
- 198: Hold frame
- 199: IR cutoff filter
- 221: Release switch
- 01: First optical axis
- 02: Second optical axis

### Best Mode of Carrying Out the Invention

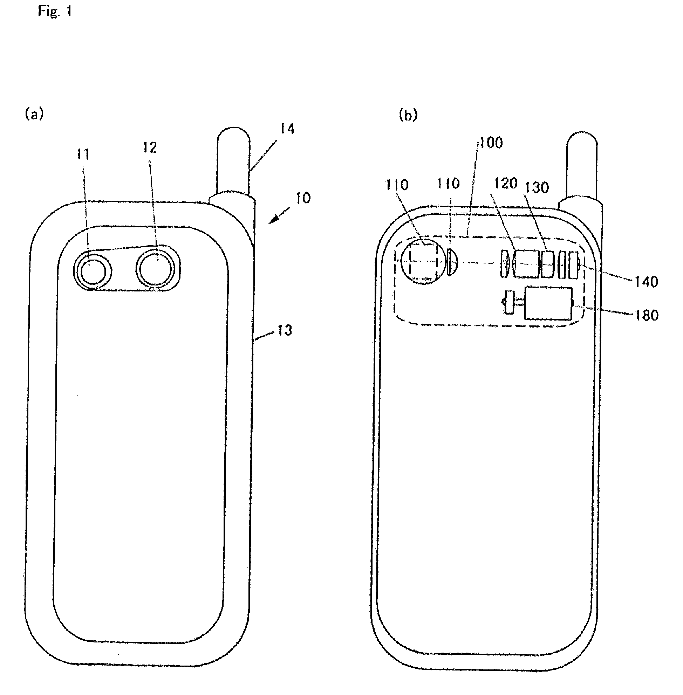

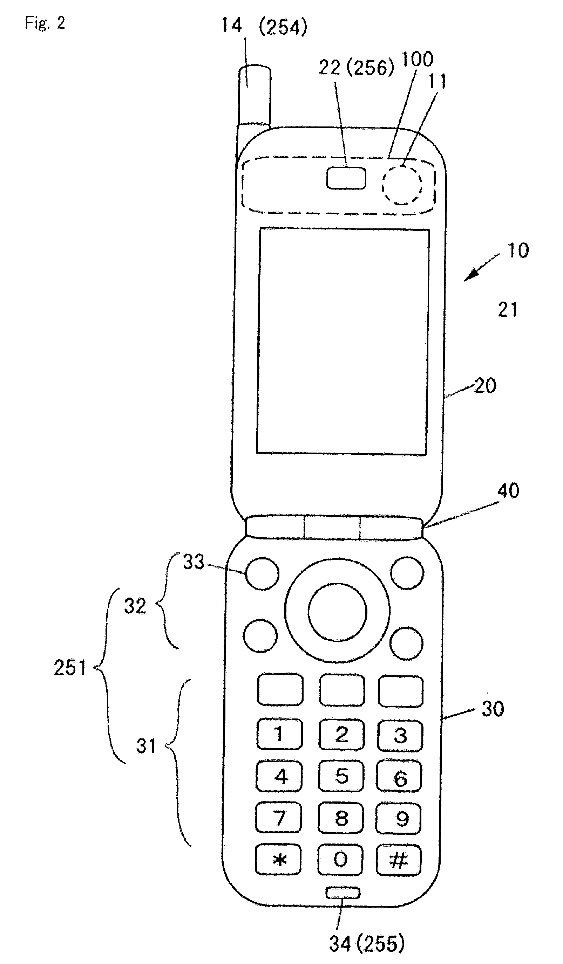

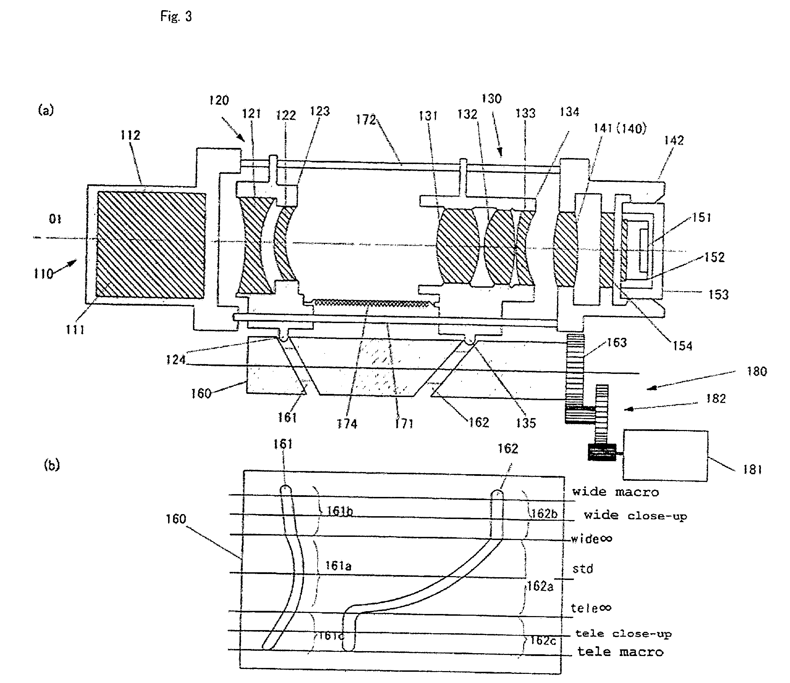

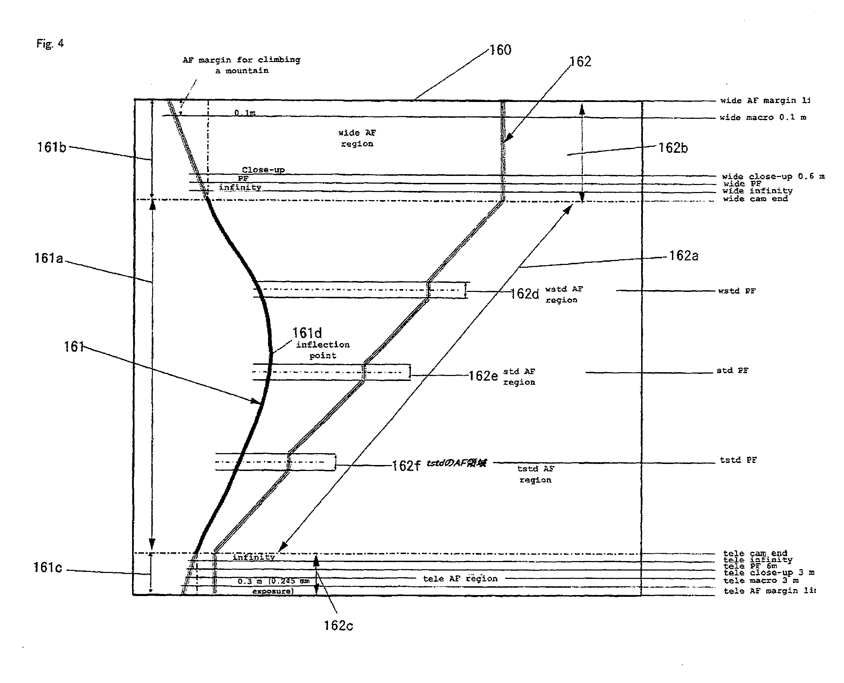

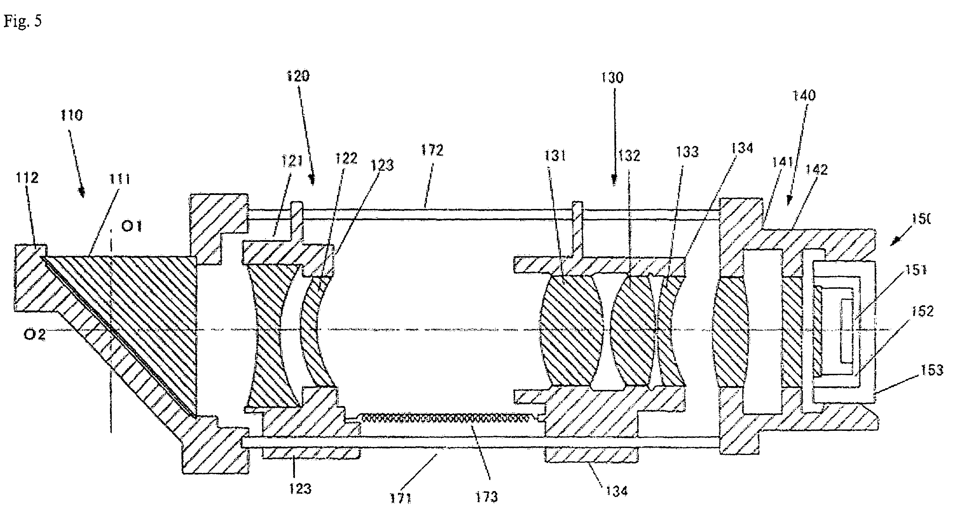

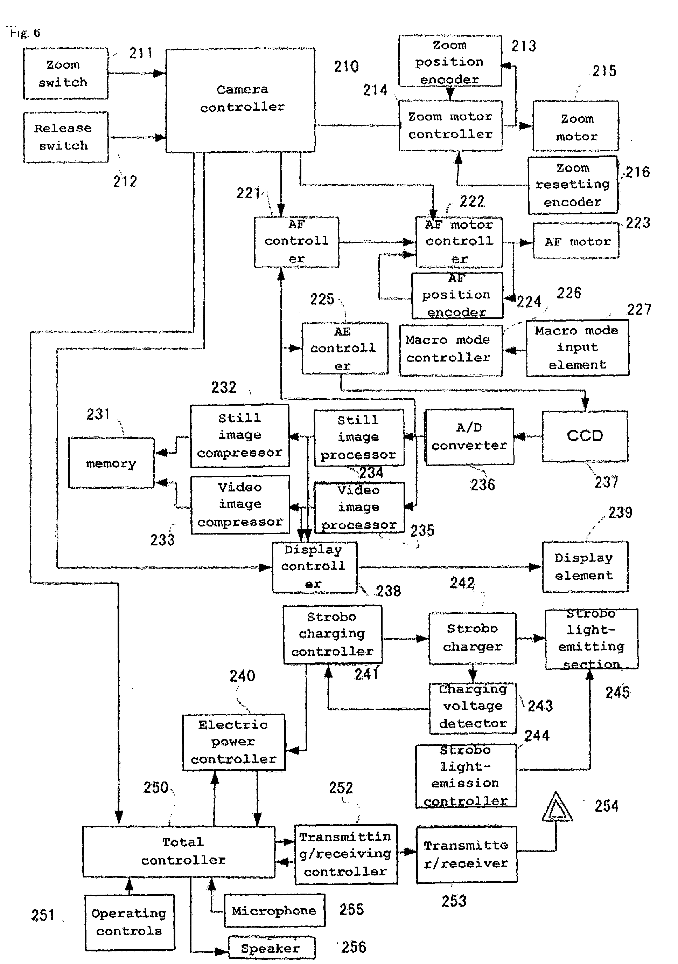

Embodiments of an electronic imaging device according to the present invention are described below. Fig. 1 shows a cellular phone to which an embodiment of an electronic imaging device is applied, wherein (a) is a front external view showing the cellular phone, and (b) is a front view showing the cellular phone in which the electronic imaging device is mounted. Fig. 2 is a front view showing a usage state of the cellular phone shown in Fig. 1. Fig. 3 shows an electronic imaging device, (a) is a longitudinal sectional view of an embodiment f an electronic imaging device according to the present invention, and (b) is a diagram showing a cam profile in an example of a Z-cam of an electronic imaging device. Fig. 4 is a development diagram showing a detailed cam profile in a Z-cam of an embodiment of an electronic imaging device according to the present invention. Fig. 5 is a cross-sectional view of the electronic imaging device according to the embodiment. Fig. 6 is a block diagram showing a control circuit of the electronic imaging device according to the embodiment.

As shown in Fig. 1, the electronic imaging device 100 in the present embodiment is built into the cellular phone 10. The cellular phone 10 has a digital camera function as well as phone, mail, and web-browsing functions. In the present embodiment, the cellular phone 10 includes an imaging window 11, stroboscope light-emitting window 12, and antenna 14 of the electronic imaging device 1, as shown in Fig. 2. The cellular phone 10 in the present embodiment also has a first enclosure 20 and a third enclosure 30 foldably interconnected at a hinge section 40.

When the cellular phone 10 according to the present embodiment is not in use, the first enclosure 20 and the second enclosure 30 are in a folded condition, and when the cellular phone 10 is in use, both enclosures 20 and 30 are in an open condition as shown in Fig. 2. In the state of Fig. 2, a liquid-crystal display screen 21 and a speaker 22 appear on the first enclosure 20, and an alphameric character input button section 31 and an operating button section 32 including a shutter button 33 appear on the second enclosure 30. The input button section 31 and the operating button section 32 are marked with, for example, printed or stamped characters or symbols to identify respective button functions.

In the present embodiment, when the electronic imaging device 100 is in an imaging state, regular positions of the characters and symbols marked on the cellular phone 10 to identify its button functions are in approximately the same direction as a vertical direction of the display screen. Also, a horizontal direction of the display screen and a lateral direction of the electronic imaging device 100 are approximately parallel and a long side of an effective imaging region of an imaging section is also approximately parallel to the vertical direction of the display screen. That is to say, the present embodiment employs vertical imaging as a standard display format of an acquired image with a vertical direction thereof taken as a top-down direction.

Next, the electronic imaging device 100 according
to an embodiment of the present invention is described below.
In an embodiment of the present invention, the electronic imaging device 100 has a four-group zoom lens unit of x3 optical power, as shown in Figs. 3a and 5. In the present embodiment, a first group 110 includes a prism 111 and a prism frame 112. A second group 120 includes two negative lenses, 121, 122, and a frame structure 123 that holds the negative lenses, 121, 122. A third group 130 includes two positive lenses, 131, 132, one negative lens, 133, and a frame structure 134. A fourth group 140 includes one positive lens, 141. In the present embodiment, the first group 110 and the fourth group 140 are fixed to respective lens barrels, and the second group 120 and the third group 130 are movable groups that are moved along an optical axis.

In the present embodiment, the first group 110 is constructed only of the prism 111 that bends a beam of light at an angle of 90 degrees along a first optical axis 01. An entrance surface and exit surface of the prism 111 are both constructed as an optical plane not having negative/positive optical power, and a bent surface having the form of an isosceles right triangle is lined by deposition with aluminum. An optical axis along which the beam bent 90 degrees by the prism 111 is to be routed is taken as a second optical axis 02. Electronic imaging section 150 is provided behind the fourth group 140. The electronic imaging section 150 includes an imaging element 151 such as a CCD, a package 152 that holds the element, a hold frame 153 that holds the package 152, and an IR cutoff filter 154 that cuts off infrared light. In the present embodiment, the hold frame 153 is constructed to be held to a fixed frame 142, a member for holding the positive lens 141, in such a way as to be movable along the second optical axis 02. This construction allows for focus control during manufacturing processes. Either an absorbing type or a reflecting type is usable as the IR cutoff filter 154. The reflecting type is used in the present embodiment.

In the present embodiment, as shown in Figs. 3a and 5, the frame structure 123 of the second group 120 and the frame structure 134 of the second group 130 are held by a suspension shaft 171 and an anti-rotation member 172, both the shaft 171 and the member 172 spanning in parallel to the second optical axis 02 between the prism frame 112 of the first group 110 and the hold frame 153. The thus-held frame structure 123 and frame structure 134 are movable between the first group 110 and the second group 120, along the second optical axis 02. Also, between the frame structure 123 of the second group 120 and the frame structure 134 of the second group 130 is mounted an inter-group spring 173, which is biased in a traction direction.

Next, a driving mechanism of the second group 120 and the third group 130 is described below.
In the present embodiment, the frame structure 123 of the second group 120 and the frame structure 134 of the second group 130 are formed with pins 124 and 135, respectively. The pins 124 and 135 are partly inserted into cam grooves 161 and 162, respectively, of a Z-cam 160 driven by a stepping motor 181 which constitutes a driving source 180. The present embodiment assumes that the stepping motor 181 has approximately 20 cogging points which the motor moves past during rotation. Also, the stepping motor 181 constitutes the driving source 180 by meshing with a gear 163 provided at an end of the Z-cam via a reduction gear train 182.

The Z-cam 160 is a cylindrical cam that rotates through about 300 degrees while it rotationally moves from a "Wide" (wide-angle) end to a "Tele" (telescopic) end. The Z-cam 160 has two cam grooves, 161 and 162, formed therein: one for the second group and one for the third group.

In the present embodiment, the cam groove 161 for the second group is constructed of a zoom region 161a ranging from the wide-angle end to the telescopic end, an extended region 161b at the wide-angle side, and an extended region 161c at the telescopic side. Also, the cam groove 162 for the third group is constructed of a zoom region 162a ranging from the wide-angle end to the telescopic end, an extended region 162b at the wide-angle side, and an extended region 162c at the telescopic side.

In a present example, as shown in Fig. 3(b), in the zoom region 161a, the second group 120 reverses in a range from "Wide" to "std" (standard) and moves forward in a range from "std" to "Tele". At this time, in the zoom region 162a, the third group 130 moves forward in a range from "Wide" to "Tele" monotonously. The third.group, compared with the second group, moves through a long distance, and an inter-group distance between the second group and the third group becomes a minimum at "Tele."

Additionally, in the present example, at the "Wide" end and the "Tele" end, the extended wide-angle region 162b and extended telescopic region 162c of the cam groove 162 for the third group are right-angled to the second optical axis and the third group does not move in a direction of the second optical axis 02. In the meantime, when the extended wide-angle region 161b and extended telescopic region 162c at the "Wide" end and the "Tele" end, respectively, are viewed from the "std" side, the cam groove 161 for the second group is progressively delivered in a direction of an object to be imaged, along the second optical axis 02. After the third group 130 has been fixed to that section, the second group 120 is delivered and focusing from an infinite region through a normal close-up region to a macro close-up region is thus conducted. Focusing can likewise be implemented by moving the second group 120 and the third group 130 forward through the same distance at the same time. Since this increases the moving distance required, however, focusing from the infinite side to the close-up side is accomplished in the present example by moving only the second group 120 with the third group 130 remaining fixed.

Furthermore, in embodiments of the present invention, shapes of cam grooves other than the cam grooves of the "Wide" and "Tele" ends are determined to achieve so-called pan focus so that an in-focus state can be obtained over the entire range from infinity to close-up.

Next, the Z-cam 160 shown in Fig. 4 is described below. In this embodiment of the present invention, the cam groove 161 for the second group and the cam groove 162 for the third group are formed in the Z-cam 160 similarly to the Z-cam discussed above. In the present embodiment, focusing regions 162d, 162e, 162f are formed at wide-angle, standard, and telescopic sides, respectively, in the zoom region 162a of the cam groove 162 for the third group. In the focusing region 162d, each cam groove is disposed perpendicularly to the optical axis and the third group 130 does not move in the direction of the second optical axis 02. Accordingly, a zoom ratio between the lenses becomes constant. In the zoom region of the second-group cam groove 161 that is associated with the focusing regions 162d, 162e, 162f, the second group 120 is moved along the optical axis 02 and this movement makes focusing possible.

The present embodiment also assumes that the focusing regions 162d, 162e, 162f has small force control width, compared with the focusing regions provided at the wide-angle end and the telescopic end. Additionally in the present embodiment, infinity is assigned to entrance ends of both the extended wide-angle region and extended telescopic region provided at the wide-angle end and the telescopic end. For this reason, a moving-direction change point 161d is formed in the zoom region of the cam groove 161 for the second group. In addition, the present embodiment assumes that the focusing regions in the zoom region are formed so as not to be included in the inflection point (change point) 161d. Smooth focusing is thus possible.

Next, a control circuit of the electronic imaging device according to the present embodiment is described below. Fig. 6 is a block diagram showing the control circuit of the electronic imaging device according to the present embodiment. In the control circuit of the present embodiment, a zoom switch 211 and a release switch 221 (in Fig. 2, the shutter button 33), both arranged on the cellular phone 10, are connected to a camera controller 210. In accordance with operations of the zoom switch 211 and the release switch 221, the control circuit uses a zoom motor controller 214 to drive a zoom motor 215, the stepping motor 181 for rotationally driving the Z-cam 160. A zoom position encoder 213 that acquires zoom position information, and a zoom-resetting encoder 216 that initializes a zoom position are connected to the zoom motor controller 214.

The camera controller 210 has an AF controller 221 that undertakes auto-focusing control, and an AF motor 223 is driven under control of an AF motor controller 222 connected to the AF controller 221. An AF position encoder 224 is also connected to the AF motor controller 222. In the present embodiment, the stepping motor 181 functions as an AF motor and the above-mentioned zoom motor 215. That is to say, as shown in Fig. 4, in the present embodiment, the electronic imaging device 100 maintains lenses in a pan-focus state while the target object is in a range from a maximum wide-angle region to a maximum telescopic region, and conducts focusing in the extended regions 161a, 161b, 162a, 162b of the cam grooves 161, 162. Accordingly, the stepping motor operates as the zoom motor in the range from the maximum wide-angle region to the maximum telescopic region, and operates as the AF motor in the extended regions 161a, 161b, 162a, 162b.

In the present embodiment, the cellular phone 10 further has a macro mode input element (a push button on the cellular phone 10) and a macro mode controller 226 in order to enable imaging in a macro mode.

The control circuit has a CCD (charge-coupled device) 237 (in Fig. 5, element 151) as an imaging element. One type of image signal from the CCD 237 is sent to a still image processor 234 via an A/D converter 236 and then stored into a memory 231 via a still image compressor 232. Similarly, another type of image signal from the CCD 237 is sent to a video image processor 235 via the A/D converter 236 and then stored into the memory 231 via a video image compressor 233. In the present embodiment, the CCD 237 is automatically exposure-controlled by an AE controller 225.

Additionally in the present embodiment, the cellular phone 10 has a display element 239 (in Fig. 2, liquid-crystal display 21) that makes a color display of a still image or a video image under display control of a display controller 238.

In the present embodiment, a stroboscope light-emitting section 245 (in Fig. 1, stroboscope light-emitting window 12 for emitting light) is provided for target object illumination. A stroboscope charger 242 and a charge voltage detector 243 are connected to the stroboscope light-emitting section 245, and charging is controlled by the stroboscope charger 242 and the charge voltage detector 243. In the present embodiment, the stroboscope charge controller 241 oscillates in response to an external pulse signal and generates a high voltage, and the stroboscope light-emitting section 245 has a stroboscope light-emission controller 244, which controls the stroboscope light-emitting section 245 to emit an appropriate amount of light.

The electronic imaging device 100 in the present embodiment has a total controller 250 that controls the entire cellular phone 10, and the total controller 250 has a transmitting/receiving controller 252, a transmitter/receiver 253, and an antenna 254, which are phone functions. The total controller 250 also has push buttons and other controls, a microphone 255 (in Fig. 2, element 34), and a speaker 256 (in Fig. 2, element 22).

Furthermore, the electronic imaging device 100 according to the present embodiment has an electric power controller 240, which conducts efficient power consumption control of a secondary cell (not shown) of a limited capacity of the cellular phone 10 as a whole. In other words, the electric power controller 240 controls supply of electric power from the secondary cell to various sections. These sections refer to: a driver that includes the stepping motor 181 adapted to move the above-described lens groups for a magnification change; an imaging section (such as CCD 237) that converts an image of the target object into an electrical signal; a display section including the display element 239 that makes various displays, inclusive of the image acquired by the imaging section; and a communications section adapted for purposes such as conversations, mail/data transfer, and Internet connection.

Under such power supply control, the supply of electric power to the communications section for phone conversations, mailing, web browsing, data communications, and more, and to the imaging section for acquiring electronic images, is conducted under a required relationship. Power is supplied to these sections by changing the required relationship according to the amount of charge left in the secondary cell.

More specifically, the required relationship in the electric power controller 240 can include prohibiting the supply of electric power to the communications section during the supply of electric power to the driver and the imaging section, or prohibiting the supply of electric power to the driver and the imaging section during the supply of electric power to the communications section.

Also, the electric power controller 240 can have at least one of four functions intended for a speed change of the driver, a frame rate change of the imaging section, a display brightness change of the display section, and a communications rate change of the communications section.

In accordance with either a charge status of the stroboscope charger 242 or the amount of charge left in the secondary cell, the electric power controller 240 can also change either a frequency or duty ratio of the pulse signal input to the above charger.

In addition, when electric power is supplied to the driver, the imaging section, the display section, and/or the communications section, the electric power controller 240 can limit or prohibit the supply of electric power to the above charger.

Furthermore, the electric power controller 240 can calculate a suppliable amount of electric power according to the particular residual amount of charge in the secondary cell, and supply electric power to the imaging section, the display section, and/or the communications section. Even during the supply of electric power to these sections, the electric power controller 240 can also supply the power to the charger if the secondary cell has margins on its capacity. In that case, while controlling the pulse signal, the electric power controller 240 can control a total supply rate of the power so that this supply rate does not exceed an energy supply capability of the secondary cell.

Furthermore, when a decrease in the residual amount of charge in the secondary cell is detected, the electric power controller 240 can lower a frequency (rate) at which the stroboscope light-emitting section 245 can emit light.

The present embodiment assumes that the required relationship in the electric power controller 240 can be changed by a user.

The reflective optical system can be reduced in depth and when the electronic imaging device is mounted in an electronic appliance such as a cellular phone, the electric appliance can be minimized in thickness. In addition, since the reflective optical section closest to the target object does not have any related lenses, it is possible to easily conduct optical axis alignment and to reduce the electronic imaging device in thickness. Furthermore, electric power consumption in the electronic imaging device can be minimized and this, in turn, minimizes energy consumption in the secondary cell of the cellular phone in which the electronic imaging device is mounted.

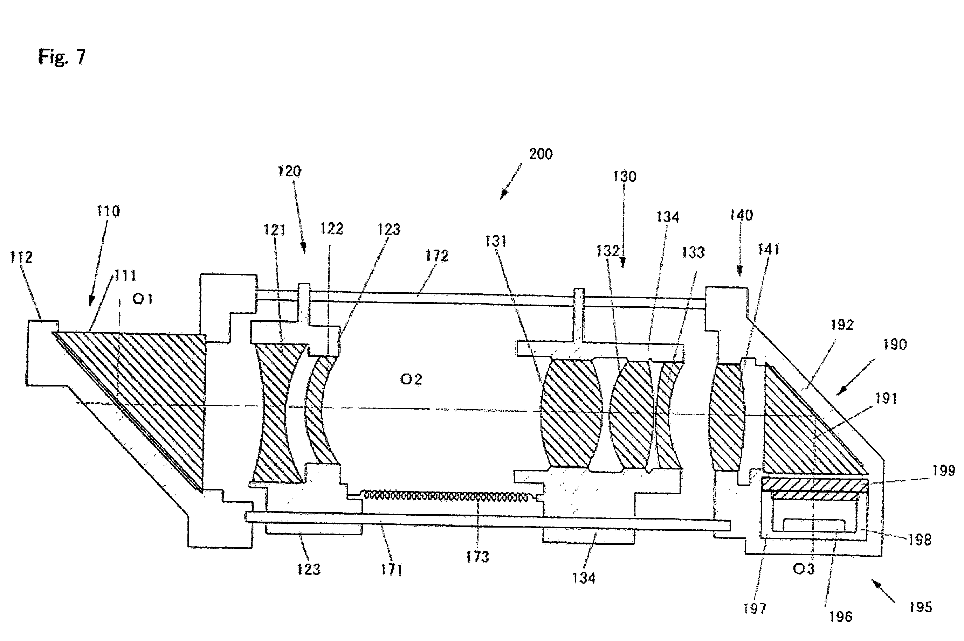

Next, another embodiment of an electronic imaging device according to the present invention is described below. Fig. 7 is a cross-sectional view of the electronic imaging device 200 according to the present (second) embodiment. The present embodiment has the same basic construction as that of the electronic imaging device 100 according to the first embodiment described above. In Fig. 7, the same reference number or symbol is assigned to the same member as that of the above electronic imaging device 100, and description of these members is omitted. In the present (second) embodiment, a reflective optical system 190 is disposed at a stage posterior to a fourth group 140, a third optical axis 03 is set at right angles to a second optical axis 02, and an imaging system 195 is disposed on the third optical axis 03.

In the present embodiment, the reflective optical system 190 includes a rectangular prism 191 and a prism frame 192. An entrance surface and exit surface of the rectangular prism 191 are both constructed as an optical plane not having negative/positive optical power, and a bent surface having the form of an isosceles right triangle is lined by deposition with aluminum. The imaging system 150 according to the present embodiment includes an imaging element 196, a package 197, a hold frame 198, and an IR cutoff filter 199.

According to the electronic imaging device 200 of the present embodiment, providing reflective optical elements makes it possible to prevent an increase in the thickness of the electronic imaging device due to package thickness of the imaging element, and thus to construct the electronic imaging device as a thinner one.

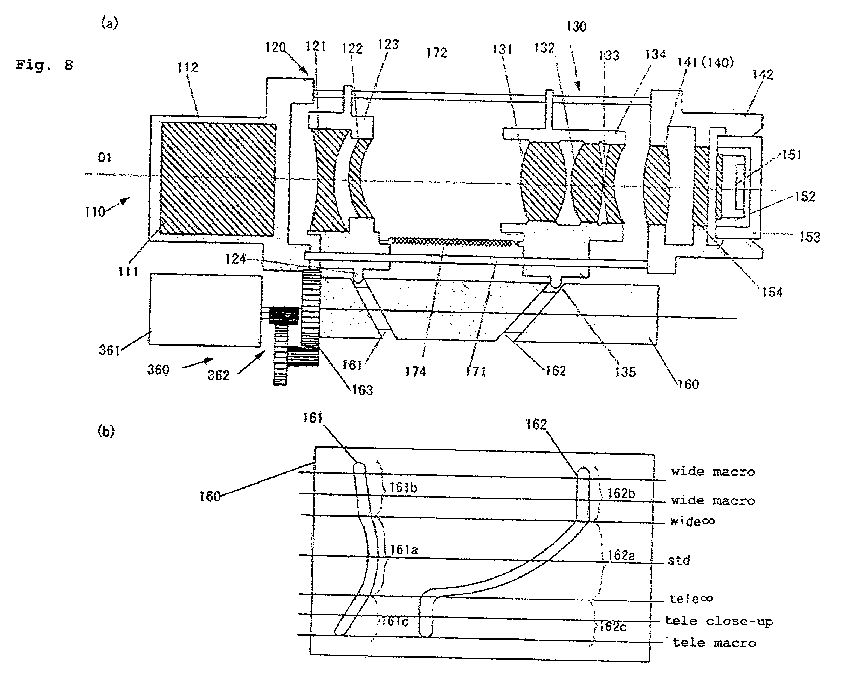

Next, an electronic imaging device according to yet another embodiment is described below. Fig. 8 shows an electronic imaging device 300, (a) is a longitudinal sectional view of a present (third) embodiment of an electronic imaging device according to the present invention, and (b) is a diagram showing a cam profile in an example of a Z-cam of an electronic imaging device. The electronic imaging device 300 according to the present embodiment is modified in that the positions of the electronic imaging device 100 and driving source 360 in the first embodiment are both changed to the side of the first group 110. In the present (third) embodiment, the driving source 360 includes a stepping motor 361 and a gear train 362 and transmits driving force to the gear 163 of the Z-cam 160. According to the present embodiment, the electronic imaging device 300 can be reduced in overall length.

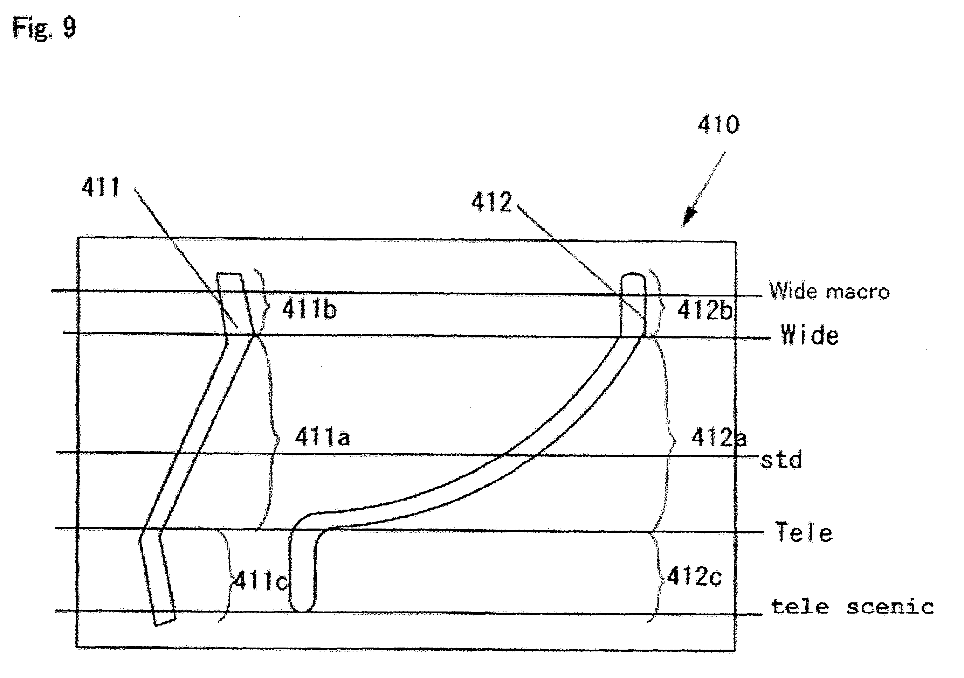

Next, another example of an electronic imaging device is described below. In the present modification, only a Z-cam 410 differs from the Z-cams of the above embodiments in terms of cam profile. Fig. 9 is a diagram showing the cam profile of the Z-cam in the present modification of the electronic imaging device according to the associated embodiment.

In the present example, a cam groove 411 for a second group is constructed of a zoom region 411a ranging from a wide-angle end to a telescopic end, an extended region 411b at the wide-angle side, and an extended region 411c at the telescopic side. Also, a cam groove 412 for a third group is constructed of a zoom region 412a ranging from the wide-angle end to the telescopic end, an extended region 412b at the wide-angle side, and an extended region 412c at the telescopic side.

In the present example, at the wide-angle ("Wide") end, the extended wide-angle region 412b of the cam groove 412 for the third group is right-angled to a second optical axis and the third group does not move in a direction of the second optical axis 02. In the meantime, when the extended wide-angle region 411b at the "Wide" end is viewed from the "std" side, the cam groove 411 for the second group is progressively delivered in a direction of an object to be imaged, along the second optical axis 02. After the third group 130 has been fixed to that section, the second group 120 is delivered and focusing from a pan-focus region to a macro close-up region is thus conducted.

In the meantime, at the "Tele" end, the extended telescopic region 412c of the cam groove 412 for the third group is right-angled to the second optical axis and the third group does not move in the direction of the second optical axis 02. Meanwhile, when the extended telescopic region 411c at the "Tele" end is viewed from the "std" side, the cam groove 411 for the second group is progressively drawn in towards an imaging element along the second optical axis 02. After the third group 130 has been fixed to that section, the second group 120 is drawn in and focusing from the pan-focus region to a Telescopic view region is thus conducted.

In addition, in the present example, shapes of cam grooves other than the cam grooves of the "Wide" and "Tele" ends are determined to achieve so-called pan focus so that an in-focus state can be obtained over the entire range from infinity to close-up.

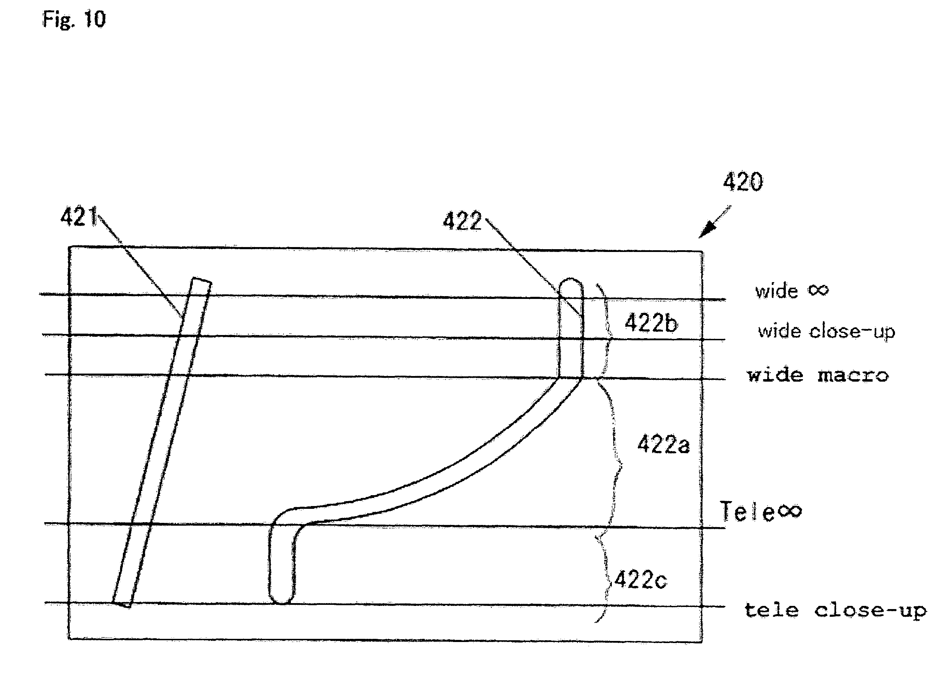

Next, yet another example of an electronic imaging device is described below.
In the present modification, only a Z-cam 420 differs from the Z-cams of the above embodiments in terms of cam profile. Fig. 10 is a diagram showing the cam profile of the Z-cam in the present example of the electronic imaging device according to the associated embodiment.

In the present example, a cam groove 421 for a second group is constructed of a zoom region 421a ranging from a wide-angle end to a telescopic end, an extended region 421b at the wide-angle side, and an extended region 421c at the telescopic side. Also, a cam groove 422 for a third group is constructed of a zoom region 422a ranging from the wide-angle end to the telescopic end, an extended region 422b at the wide-angle side, and an extended region 422c at the telescopic side.

In the present example, at the wide-angle ("Wide") end, the extended wide-angle region 422b of the cam groove 422 for the third group is right-angled to a second optical axis and the third group does not move in a direction of the second optical axis 02. In the meantime, when the extended wide-angle region 421b at the "Wide" end is viewed from the "std" side, the cam groove 421 for the second group is progressively drawn in towards an imaging element along the second optical axis 02. After the third group 130 has been fixed to that section, the second group 120 is drawn in and focusing from a "Wide" macro region through a "Wide" close-up region to "Wide" infinity (∞) is thus conducted.

In the meantime, at the "Tele" end, the extended telescopic region 422c of the cam groove 422 for the third group is right-angled to the second optical axis and the third group does not move in the direction of the second optical axis 02. Meanwhile, when the extended telescopic region 421c at the "Tele" end is viewed from the "std" side, the cam groove 421 for the second group is progressively drawn in towards an object to be imaged, along the second optical axis 02. After the third group 130 has been fixed to that section, the second group 120 is drawn in and focusing from "Tele" infinity (∞) to a "Tele" close-up region is thus conducted.

In addition, in the present example, shapes of cam grooves other than the cam grooves of the "Wide" and "Tele" ends are determined to achieve so-called pan focus so that an in-focus state can be obtained over the entire range from infinity to close-up.

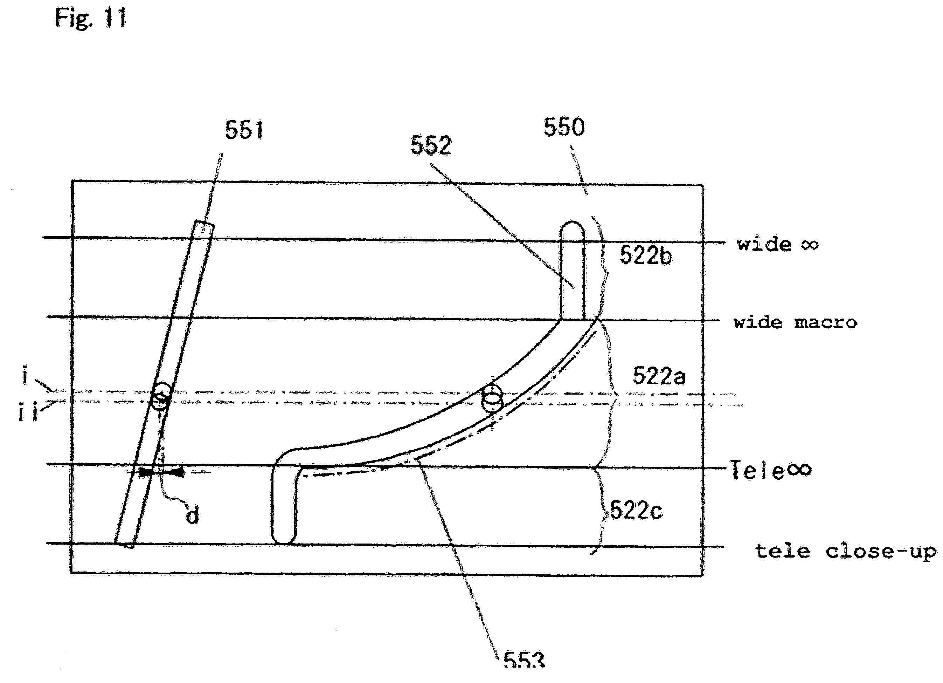

Next, an electronic imaging device 500 in a further example is described below. In the present embodiment, focusing in a zoom region is possible and a Z-cam 550 differs from the Z-cams of the above embodiments in terms of cam profile. Fig. 11 is a diagram showing the cam profile of the Z-cam in an example of an electronic imaging device.

In the present example, a cam groove 551 for a second group is constructed of a zoom region 551a ranging from a wide-angle end to a telescopic end, an extended wide-angle region 551b, and an extended telescopic region 551c. The three regions are formed in approximately rectilinear form, and respective widths in a direction of an optical axis are approximately the same as width of a pin 124 associated with the second group 120. Also, a cam groove 552 for a third group is constructed of a zoom region 552a ranging from the wide-angle end to the telescopic end, an extended wide-angle region 552b, and an extended telescopic region 552c. In the present example, these three regions are formed so that respective widths in the direction of the optical axis are approximately the same as width of a pin 135 associated with the third group 130, and so that the widths of the three regions are greater than the width of the zoom region 552a in the direction of the optical axis.

In the present example, the third group 130 has suitable frictional force and is held so that once positioned, the third group 130 will move only when it comes into contact with the cam groove 552. This can be achieved by, for example, generating great friction between a suspension shaft 171 and a frame structure 134 or biasing the frame structure 134 perpendicularly with respect to the optical axis.

According to the present example, as shown in Fig. 11, after the Z-cam 550 has been rotated for a required zoom ratio, the pin 135 disposed in the cam groove 552 will not move, even when a pin 124 engaged with the cam groove 551 is moved by rotationally moving the Z-cam 550 from position "i" to position "ii" shown in Fig. 11. In this range, therefore, the first group 110 can be moved for focusing.

In the present example, focusing in the extended telescopic region and the extended wide-angle region can be conducted similarly to each embodiment or example described above.

According to the present example, therefore, focusing can be conducted in all zoom regions and high-quality images can be obtained.

In addition, in the above example, the cam groove 552 can be constructed so that as denoted by reference number 553 in Fig. 11, the dimension of the cam groove 552 in the direction of the optical axis spreads towards the telescopic side. According to the present embodiment, a moving distance of the second group 120 can be increased during focusing in the zoom region.

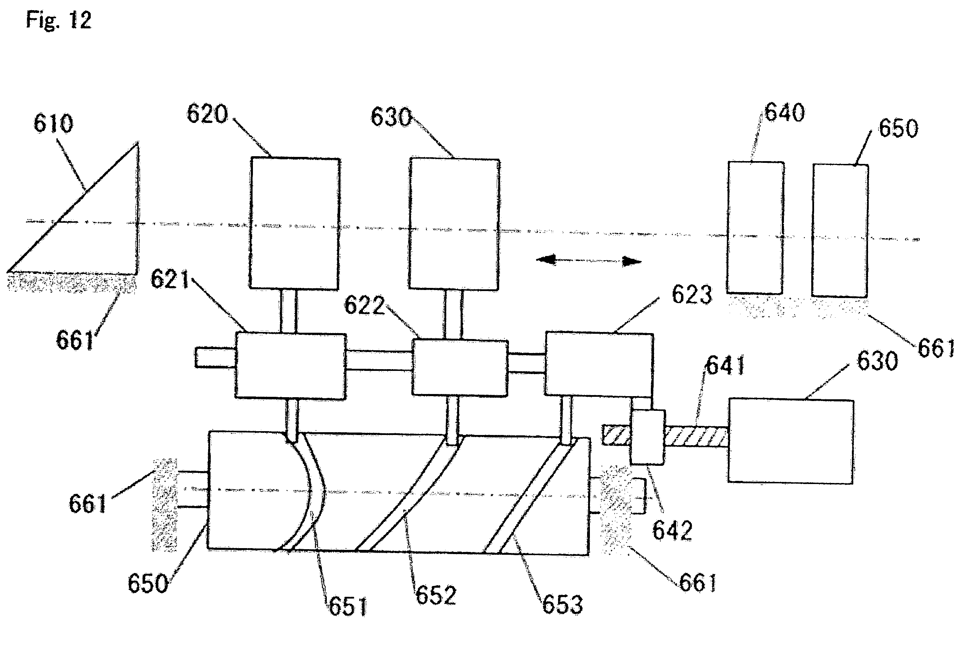

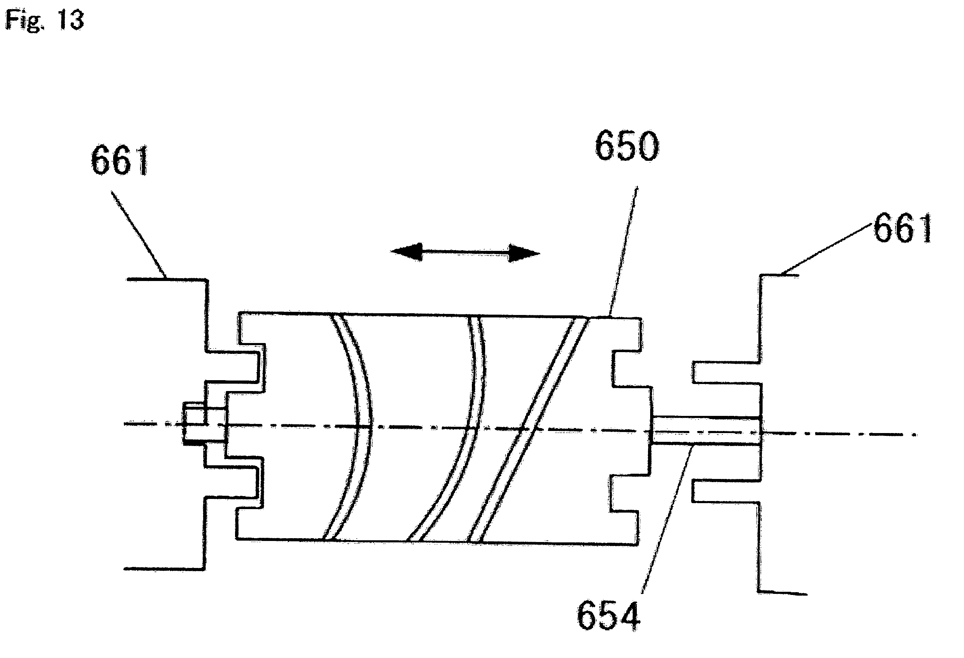

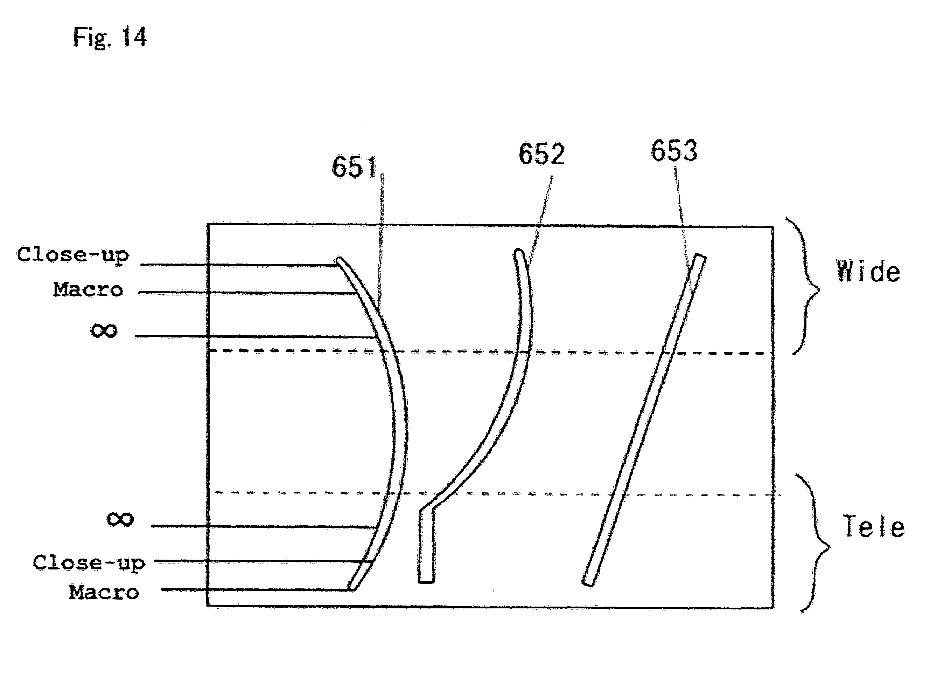

Next, an electronic imaging device 600 in a further example is described below. Fig. 12 is a diagram showing schematically the electronic imaging device according to the present example. Fig. 13 is a diagram showing an installation state of a Z-cam of the electronic imaging device shown in Fig. 12. Fig. 14 is a diagram showing a cam profile of the Z-cam in the electronic imaging device of Fig. 12.

The electronic imaging device 600 according to the present embodiment makes the Z-cam 650 movable in parallel with respect to an optical axis, and drives the Z-cam as an inverse cam. Hence, cam grooves 651 and 652 for moving a second group and a third group, respectively, a cam groove 653 for moving the Z-cam 650, and a carriage 623 that engages with the cam groove 653 are provided in the present example.

As shown in Fig. 12, the electronic imaging device 600 according to the present example includes the Z-cam 650, the second group 620, the third group 630, and frame structures 621 and 631 that engage with the cam grooves 651 and 652, respectively, of the Z-cam 650. Also, a stepping motor 641 in a driving system 640 of the present example has a screw rod 642 and a nut member 643 threaded onto the screw rod 642, and drives the carriage 623. A movement of the carriage 623 rotates the Z-cam 650. The second group 620 and the third group 630 are then driven for zooming. The cam grooves 651 and 652 can, as shown in Fig. 14, be constructed similarly to the cam grooves of each embodiment or example described above.

In addition, a first group 610, a fourth group 640, an imaging element 650, and a sliding shaft 654 are fixed to a device body 661 of the electronic imaging device 600.

Furthermore, in the present example, as shown in Fig. 12, the second group 620, the third group 630, and the driving system 640 are constructed as a whole so as to irrotationally movable in a direction of an optical axis (as indicated by arrow A in Figs. 12, 13). Accordingly, as shown in Fig. 13, the Z-cam 650 is rotatably and slidably installed on the sliding shaft 654 provided in parallel to an optical axis 02 of the device body 661.

In the present example, focusing is accomplished by moving the Z-cam 650, the second group 620, the third group 630, and the driving system 640, along the sliding shaft 654 via an element not shown, for example, a stepping motor or the like.

### [Industrial Applicability]

According to the present invention, since the zoom lens mechanism of the electronic imaging device is of simple focusing construction, it is possible to obtain an electronic imaging device that is compact and high in zoom ratio and in image quality.

According to the present invention, since the optical system is constructed so as to ensure pan focus during zooming, the image to be acquired is free from blurring, even during zooming towards the telescopic side and the wide-angle side. In addition, since the optical system is constructed so that infinite, close-up, and macro focusing operations can be performed at the telescopic end and/or the wide-angle end, it is possible to obtain an in-focus sharp image at the focusing end, whether it be the telescopic end or the wide-angle end.

According to embodiments of the present invention, since reflective optics is included in the optical system, this optical system can be reduced in depth and when the electronic imaging device according to the present invention is mounted in an electronic appliance such as a cellular phone, the electric appliance can be minimized in thickness. In addition, since the reflective optics closest to the target object does not have any related lenses, it is possible to easily conduct optical axis alignment and to reduce the electronic imaging device in thickness. Furthermore, when the electronic imaging device has reflective optics at the imaging element side, an increase in the thickness of the electronic imaging device due to package thickness of the imaging element can be prevented, which makes the electronic imaging device constructible as an even thinner one.

According to embodiments to the present invention, the electronic imaging device can be dimensionally reduced since refractive optics is dimensionally limited to the minimum required.

According to embodiments to the present invention, when the electronic imaging device is of the construction intended for an electronic appliance in which the imaging device is to be used in a vertically long position, the electronic imaging device can be disposed in a transverse direction and is particularly suitable for use in a cellular phone when images are acquired with the cellular phone held in a vertically long position.

According to embodiments to the present invention, since the electronic imaging device includes an electric power controller, it is possible to minimize the power consumed in the electronic imaging device, and thus to minimize the energy consumed in a secondary cell of an electronic appliance in which the electronic imaging device is mounted.

The present invention can be used for PDAs, compact digital cameras, and other electronic appliances, as well as for cellular phones.

## Claims

1. An electronic imaging device (100) comprising:
a first lens group (110) positioned in the closest proximity to an object to be imaged, among all major optical elements of the imaging device;
a second lens group (120) that moves to change a magnification of an image to be acquired;
a third lens group (130) whose movement for another magnification change of the image to be acquired differs from the movement of the second lens group (120); and
lens group moving means equipped with driving means (180) and with cam grooves (161, 162) for moving the second lens group (120) and the third lens group (130) through respective predefined distances along an optical axis according to the particular amount of driving by the driving means (180), the lens group moving means being adapted to change a total variable magnification of the second lens group (120) and the third lens group (130); **characterized in that**
the cam grooves (161, 162) in the lens group moving means are formed to include, in a zoom region (161a, 162a) from a wide-angle end to a telescopic end, a focusing region (162d, 162e, 162f) in which a focal point can be moved by controlling a total movement of both the second and third lens groups (120, 130) with the third lens group (130) fixed in a direction of the optical axis in the region where the second lens group (120) and the third lens group (130) enter a pan-focus state; the lens group moving means being adapted to reciprocate the second lens group (120) along an optical axis in the zoom region (161a);
wherein the focusing region (162d, 162e, 162f) in the zoom region (161a, 162a) is set so as not to include a section of a change point of a moving direction of the second lens group (120).

2. The electronic imaging device according to claim 1, wherein the first lens group (110) includes reflective optical means adapted to reflect a beam of light along an optical path from the target object.

3. The electronic imaging device according to claim 1 or 2, further comprising an electronic imaging element (151) .

4. The electronic imaging device according to claim 3, further comprising: focusing control means adapted to receive a signal from the electronic imaging element (151) and perform focusing control of the driving means.

5. The electronic imaging device according to any one of claims 1 to 4, further comprising:
mode selection means adapted to make a pan-focus mode or an auto-focus mode selectable; wherein,
when the pan-focus mode is selected using the mode selection means, the focusing control means controls the driving of the lens group moving means and causes the lens groups (120, 130) in the wide-angle end state and in the telescopic end state to be arranged at the pan-focus position in the extended cam region.

6. The electronic imaging device according to any one of claims 1 to 5,
wherein the lens group moving means includes a wide-angle macro region focus controller in the extended cam region formed at a position anterior to the wide-angle end, and/or a telescopic macro focus controller in the extended cam region formed at a position anterior to the telescopic end.

7. The electronic imaging device according to any one of claims 1 to 6, wherein, when viewed from the wide-angle end or the telescopic end, the extended cam region of the lens group moving means is formed at an infinite position, a normal imaging close-up position, and a macro region position, in that order.

8. The electronic imaging device according to any one of claims 1 to 7, wherein
the cam grooves in the lens group moving means include a first cam groove (161) that determines a moving distance of the second lens group (120), and a second cam groove (162) that determines a moving distance of the third lens group (130);
the first cam groove (161) is formed with a wide-angle end extended cam region in which a wide-angle end macro region, a wide-angle end normal close-up region, and a wide-angle end infinite region are arranged in that order towards a cam region, the first cam groove being further formed with a variable-magnification region and a telescopic end extended cam region in which a telescopic end infinite region, a telescopic end normal imaging close-up region, and a telescopic end macro region are arranged in that order from the cam region; and
the second cam groove (162) is constructed to have a wide-angle extended cam region including a region in which the third lens group does not move in a direction of an optical axis at a wide-angle end, a variable-magnification region, and an extended cam region including a region in which the third lens group does not move in the direction of the optical axis at a telescopic end.

## Patentansprüche

1. Elektronisches Bildgebungsgerät (100), umfassend:
eine in nächster Nähe zu einem abzubildenden Objekt zwischen allen bedeutenden optischen Elementen des Bildgebungsgeräts angeordnete erste Linsengruppe (110);
eine zweite Linsengruppe (120), die sich bewegt, um eine Vergrößerung einer zu erfassenden Abbildung zu ändern;
eine dritte Linsengruppe (130), deren Bewegung zwecks einer anderen Vergrößerungsänderung der zu erfassenden Abbildung sich von der Bewegung der zweiten Linsengruppe (120) unterscheidet; und
mit Antriebsmitteln (180) und mit Kurvennuten (161, 162) ausgestattetes Linsengruppenbewegungsmittel zur Bewegung der zweiten Linsengruppe (120) und der dritten Linsengruppe (130) durch jeweilige vordefinierte Zwischenräume entlang einer optischen Achse entsprechend dem jeweiligen Antriebsumfang durch die Antriebsmittel (180), wobei das Linsengruppenbewegungsmittel zur Änderung einer vollkommen variablen Vergrößerung der zweiten Linsengruppe (120) und der dritten Linsengruppe (130) geeignet sind;
**dadurch gekennzeichnet, dass**
die Kurvennuten (161, 162) in dem Linsengruppenbewegungsmittel derart ausgebildet sind, dass sie, in einem Zoom-Bereich (161a, 162a) von einem Weitwinkel-Ende zu einem Teleskop-Ende, einen Fokussierbereich (162d, 162e, 162f) einschließen, in welchem ein Fokus durch Steuerung einer Gesamtbewegung von sowohl der zweiten als auch der dritten Linsengruppen (120, 130) bewegt werden kann, wobei die dritte Linsengruppe (130) in einer Richtung der optischen Achse in dem Bereich fixiert ist, wo die zweite Linsengruppe (120) und die dritte Linsengruppe (130) in einen Pan-Fokus-Zustand gelangt; wobei das Linsengruppenbewegungsmittel geeignet ist, die zweite Linsengruppe (120) entlang einer optischen Achse im Zoom-Bereich (161a) hin- und her zu bewegen;
wobei der Fokussierbereich (162d, 162e, 162f) so gewählt wird, dass dieser einen Abschnitt eines Umkehrpunkts einer Bewegungsrichtung der zweiten Linsengruppe (120) nicht enthält.

2. Elektronisches Bildgebungsgerät nach Anspruch 1, wobei die erste Linsengruppe (110) zur Reflexion eines Lichtstrahls entlang eines Lichtwegs von dem Zielobjekt geeignete reflektierende optische Mittel enthält.

3. Elektronisches Bildgebungsgerät nach Anspruch 1 oder 2, des Weiteren umfassend ein elektronisches Bildgebungselement (151).

4. Elektronisches Bildgebungsgerät nach Anspruch 3, des Weiteren umfassend: zum Empfang eines Signals von dem elektronischen Bildgebungselement (151) und zur Fokussierregelung der Antriebsmittel geeignete Fokussierregelungsmittel.

5. Elektronisches Bildgebungsgerät nach einem der Ansprüche 1 bis 4, des Weiteren umfassend:
geeignete Modenselektionsmittel zur Auswahl eines Pan-Fokus-Modus oder eines Auto-Fokus-Modus; wobei,
wenn über die Modenselektionsmittel der Pan-Fokus-Modus gewählt ist, das Fokussierregelungsmittel den Antrieb der Linsengruppenantriebsmittel regelt und die Linsengruppen (120, 130) veranlasst, in dem Weitwinkel-End-Zustand und in dem Teleskop-End-Zustand in der Pan-Fokus-Position in dem erweiterten Kurvenbereich angeordnet zu sein.

6. Elektronisches Bildgebungsgerät nach einem der Ansprüche 1 bis 5,
wobei das Linsengruppenbewegungsmittel einen Weitwinkel-Makrobereich-Fokussierregler in dem an einer Stelle vor dem Weitwinkel-Ende gebildeten erweiterten Kurvenbereich beinhaltet, und/oder einen Teleskop-Makro-Fokussierregler in dem an einer Stelle vor dem Teleskop-Ende gebildeten erweiterten Kurvenbereich.

7. Elektronisches Bildgebungsgerät nach einem der Ansprüche 1 bis 6, wobei, betrachtet vom Weitwinkel-Ende oder vom Teleskop-Ende aus, der erweiterte Kurvenbereich des Linsengruppenbewegungsmittels an einer infiniten Position, an einer normalen bildgebenden Nahaufnahmenposition und einer Makro-Bereichsposition in dieser Reihenfolge gebildet ist.

8. Elektronisches Bildgebungsgerät nach einem der Ansprüche 1 bis 7, wobei die Kurvennuten in dem Linsengruppenbewegungsmittel eine erste Kurvennut (161) beinhalten, die eine Wegstrecke der zweiten Linsengruppe (120) bestimmt, und eine zweite Kurvennut (162), die eine Wegstrecke der dritten Linsengruppe (130) bestimmt;
die erste Kurvennut (161) ausgebildet ist mit einem Weitwinkel-Ende erweiterten Kurvenbereich, in welchem ein Weitwinkel-Ende Makro-Bereich, ein Weitwinkel-Ende normaler Nahaufnahmen-Bereich und ein Weitwinkel-Ende Infinit-Bereich in dieser Reihenfolge in Richtung eines Kurvenbereichs angeordnet sind, wobei der erste Kurvenbereich des Weiteren mit einem vergrößerungsvariablen Bereich und einem Teleskop-Ende erweiterten Kurvenbereich ausgebildet ist, in welchem ein Teleskop-Ende Infinit-Bereich, ein Teleskop-Ende normaler Nahaufnahmen-Bereich und ein Teleskop-Ende Makro-Bereich in dieser Reihenfolge ausgehend vom Kurvenbereich angeordnet sind; und
die zweite Kurvennut (162) so aufgebaut ist, dass sie einen Weitwinkel erweiterten Kurvenbereich einschließlich eines Bereichs aufweist, in welchem die dritte Linsengruppe sich nicht in Richtung einer optischen Achse an einem Weitwinkel-Ende bewegt, einen vergrößerungsvariablen Bereich und einen erweiterten Kurvenbereich einschließlich eines Bereichs, in welchem die dritte Linsengruppe sich nicht in Richtung der optischen Achse an einem Teleskop-Ende bewegt.

## Revendications

1. Dispositif électronique d'imagerie (100) comprenant :
un premier groupe de lentilles (110) positionné dans la proximité la plus proche d'un objet dont une image doit être formée, parmi tous les éléments optiques principaux du dispositif d'imagerie ;
un deuxième groupe de lentilles (120) qui de déplace pour modifier un grossissement d'une image à acquérir ;
un troisième groupe de lentilles (130) dont le déplacement pour une autre modification de grossissement de l'image à acquérir diffère du déplacement du deuxième groupe de lentilles (120) ; et
des moyens de déplacement de groupe de lentilles équipés de moyens d'entraînement (180) et de rainures de came (161, 162) pour déplacer le deuxième groupe de lentilles (120) et le troisième groupe de lentilles (130) sur des distances prédéfinies respectives le long d'un axe optique en fonction de la quantité particulière d'entraînement par les moyens d'entraînement (180), les moyens de déplacement de groupe de lentilles étant adaptés pour modifier un grossissement variable total du deuxième groupe de lentilles (120) et du troisième groupe de lentilles (130) ; **caractérisé en ce que**
les rainures de came (161, 162) dans les moyens de déplacement de groupe de lentilles sont formées de manière à comprendre, dans une région de grossissement (161a, 162a) d'une extrémité de grand angle à une extrémité télescopique, une région de mise au point (162d, 162e, 162f) dans laquelle un foyer peut être déplacé en commandant un déplacement total à la fois des deuxième et troisième groupes de lentilles (120, 130), le troisième groupe de lentilles (130) étant fixe dans une direction de l'axe optique dans la région dans laquelle le deuxième groupe de lentilles (120) et le troisième groupe de lentilles (130) entrent dans un état de mise au point panoramique ;
les moyens de déplacement de groupe de lentilles étant adaptés pour déplacer en va-et-vient le deuxième groupe de lentilles (120) le long d'un axe optique dans la région de grossissement (161a) ;
dans lequel la région de mise au point (162d, 162e, 162f) dans la région de grossissement (161a, 162a) est déterminée de manière à ne pas comprendre une section d'un point de changement d'une direction de déplacement du deuxième groupe de lentilles (120).

2. Dispositif électronique d'imagerie selon la revendication 1, dans lequel le premier groupe de lentilles (110) comprend des moyens optiques de réflexion adaptés pour réfléchir un faisceau de lumière le long d'un trajet optique à partir de l'objet cible.

3. Dispositif électronique d'imagerie selon la revendication 1 ou 2, comprenant en outre un élément électronique d'imagerie (151).

4. Dispositif électronique d'imagerie selon la revendication 3, comprenant en outre à : des moyens de commande de mise au point adaptés pour recevoir un signal de l'élément électronique d'imagerie (151) et effectuer une commande de mise au point des moyens d'entraînement.

5. Dispositif électronique d'imagerie selon l'une quelconque des revendications 1 à 4, comprenant en outre :
des moyens de sélection de mode adaptés pour faire en sorte qu'un mode de mise au point panoramique ou un mode de mise au point automatique soit sélectionnable ; dans lequel,
lorsque le mode de mise au point panoramique est sélectionné en utilisant les moyens de sélection de mode, les moyens de commande de mise au point commandent l'entraînement des moyens de déplacement de groupe de lentilles et provoquent l'agencement des groupes de lentilles (120, 130) dans l'état de grand angle final et dans l'état télescopique final à une position de mise au point panoramique dans la région de came étendue.

6. Dispositif électronique d'imagerie selon l'une quelconque des revendications 1 à 5,
dans lequel les moyens de déplacement de groupe de lentilles comprennent un contrôleur de mise au point de région de macro grand angle dans la région de came étendue formée à une position antérieur à l'extrémité de grand angle, et/ou un contrôleur de mise au point de macro télescopique dans la région de came étendue formée à une position antérieure à l'extrémité télescopique.

7. Dispositif électronique d'imagerie selon l'une quelconque des revendications 1 à 6, dans lequel, lorsqu'elle est vue à partir de l'extrémité de grand angle ou de l'extrémité télescopique, la région de came étendue des moyens de déplacement de groupe de lentilles est formée à une position infinie, à une position de gros plan d'imagerie normal, et à une position de région de macro, dans cet ordre.

8. Dispositif électronique d'imagerie selon l'une quelconque des revendications 1 à 7, dans lequel
les rainures de came dans les moyens de déplacement de groupe de lentilles comprennent une première rainure de came (161) qui détermine une distance de déplacement du deuxième groupe de lentilles (120), et une deuxième rainure de came (162) qui détermine une distance de déplacement du troisième groupe de lentilles (130) ;
la première rainure de came (161) est formée avec une région de came étendue d'extrémité de grand angle dans laquelle une région de macro d'extrémité de grand angle, une région de gros plan normal d'extrémité de grand angle, et une région infinie d'extrémité de grand angle sont agencées dans cet ordre vers une région de came, la première rainure de came étant en outre formée avec une région de grossissement variable et une région de came étendue d'extrémité télescopique dans laquelle une région infinie d'extrémité télescopique, une région de gros plan d'imagerie normal d'extrémité télescopique, et une région de macro d'extrémité télescopique sont agencées dans cet ordre à partir de la région de came ; et
la deuxième rainure de came (162) est réalisée pour avoir une région de came étendue de grand angle comprenant une région dans laquelle le troisième groupe de lentilles ne se déplace pas dans une direction d'un axe optique à une extrémité de grand angle, une région de grossissement variable, et une région de came étendue comprenant une région dans laquelle le troisième groupe de lentilles ne se déplace pas dans la direction de l'axe optique à une extrémité télescopique.
